(19) Europäisches Patentamt
European Patent Office
Office européen des brevets

(11) Publication number: 0 146 970 B1

# (12) EUROPEAN PATENT SPECIFICATION

(45) Date of publication of patent specification: 24.04.91 (51) Int. Cl.[5]: C09K 11/55, C09K 11/61

(21) Application number: 84116449.4

(22) Date of filing: 28.12.84

## (54) Use of a divalent Eu activated Ba, Ca, F and halogen containing phosphor in a radiation image recording and reproducing method.

(30) Priority: 28.12.83 JP 247314/83

(43) Date of publication of application: 03.07.85 Bulletin 85/27

(45) Publication of the grant of the patent: 24.04.91 Bulletin 91/17

(84) Designated Contracting States: DE FR NL

(56) References cited: FR-A- 2 286 872

(73) Proprietor: FUJI PHOTO FILM CO., LTD.
210 Nakanuma Minami Ashigara-shi
Kanagawa 250-01(JP)

(72) Inventor: Mori, Nobufumi c/o Fuji Photo Film Co., Ltd.
No. 798, Miyanodai Kaisei-machi
Ashigara-kami-gun Kanagawa(JP)
Inventor: Umemoto, Chiyuki c/o Fuji Photo Film Co., Ltd.
No. 798, Miyanodai Kaisei-machi
Ashigara-kami-gun Kanagawa(JP)
Inventor: Takahashi, Kenji c/o Fuji Photo Film Co., Ltd.
No. 798, Miyanodai Kaisei-machi
Ashigara-kami-gun Kanagawa(JP)

(74) Representative: Patentanwälte Grünecker, Kinkeldey, Stockmair & Partner
Maximilianstrasse 58
W-8000 München 22(DE)

EP 0 146 970 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a radiation image storage panel employing a divalent europium activated barium fluorohalide phosphor containing a small amount of calcium and to the use of said phosphor in a radiation image recording and reproducing method.

Recently, it has been found that a divalent europium activated barium fluorohalide phosphor ($BaFX:Eu^{2+}$, in which X is at least one halogen selected from the group consisting of Cℓ, Br and I) absorbs and stores a portion of radiation energy when exposed to a radiation such as X-rays, and emits light in the near ultraviolet to blue region when excited with an electromagnetic wave within a wavelength region of 450 - 900 nm after exposure to the radiation, that is, the phosphor shows a stimulated emission (the peak wavelength of the stimulated emission is within the region of 385 - 405 nm, depending upon the kind of halogen which is a component of the phosphor). In particular, the divalent europium activated barium fluorohalide phosphor has been paid much attention and investigated as a phosphor employable for a radiation image storage panel (i.e., stimulable phosphor sheet) which is used in a radiation image recording and reproducing method utilizing a stimulable phosphor.

A radiation image storage panel has a basic structure comprising a support and at least one phosphor layer provided on one surface of the support, which comprises a binder and a stimulable phosphor dispersed therein. Further, a transparent protective film is generally provided on the free surface (surface not facing the support) of the phosphor layer to keep the phosphor layer from chemical deterioration or physical shock.

The radiation image recording and reproducing method using the above-described radiation image storage panel comprising the stimulable phosphor is a very advantageous method replacing the conventional radiography. As described, for example, in U S -A- 4,239,968, the method involves steps of causing the stimulable phosphor of the panel to absorb radiation energy having passed through an object or having radiated from an object; exciting the stimulable phosphor with an electromagnetic wave such as visible light and infrared rays (hereinafter referred to as "stimulating rays") to sequentially release the radiation energy stored in the stimulable phosphor as light emission (stimulated emission); photo-electrically detecting (reading out) the emitted light to obtain electric signals; and reproducing a visible image from the electric signals on a recording material such as a photosensitive film or on a display device such as CRT (cathode ray tube display device).

In the radiation image recording and reproducing method, a radiation image can be obtained with a sufficient amount of information by applying a radiation to the object at considerably smaller dose, as compared with the case of using the conventional radiography. Accordingly, this radiation image recording and reproducing method is of great value especially when the method is used for medical diagnosis.

The operation of reading out the radiation energy stored in the radiation image storage panel in the above-described method is generally carried out by the steps of scanning the panel with a laser beam (stimulating rays) to sequentially excite the stimulable phosphor so as to release the radiation energy stored therein as light emission and detecting the light by a photosensor such as a photomultiplier.

In the last step of the read-out operation, the light which is continuously emitted by the stimulable phosphor of the radiation image storage panel after terminating the excitation with stimulating rays (namely, afterglow of stimulated emission) causes a decrease of the S/N ratio of the resulting image. More in detail, the afterglow given by the phosphor particles other than the phosphor particles aimed to excite is detected as the light emitted by the aimed ones in the case that the phosphor gives afterglow in a relatively high ratio to the amount of the stimulated emission. As a result, the image provided by the radiation image storage panel comprising such a stimulable phosphor tends to be deteriorated on the image quality (sharpness or density resolution).

The afterglow characteristics of the panel varies depending not only on the employed stimulable phosphor but also on the intensity of stimulating rays and the scanning speed in the case of using a laser beam as the stimulating rays. In practical use, the affect of afterglow on the image quality further varies depending upon the detecting procedure of stimulated emission. Nevertheless, it is of great value to improve the afterglow characteristics of the panel which give an adverse effect to the image quality, even if the improvement is not so high.

The radiation image recording and reproducing method using a radiation image storage panel comprising a stimulable phosphor is a very advantageous method as described above, and the method is desired to show a sensitivity as high as possible. The sensitivity of the panel to a radiation generally increases as the luminance of stimulated emission of the phosphor employed therefor increases. Accordingly, it is desired that the luminance of stimulated emission of the phosphor is as high as possible.

FR-A-286872 discloses a process for the preparation of a phosphor having the formula $Me_{1-p}Eu_pFX$,

wherein Me represents at least one of Ba and Sr, wherein at most 20 mol % can be substituted by Ca, X represents at least one of Cl, Brand I and $0,001 \leqq p \leqq 0,20$.

It is the object of the present invention to provide a radiation image storage panel which is enhanced in the sensitivity as well as in the quality of the image provided thereby.

Said object is achieved by the use of a divalent europium activated barium fluorohalide phosphor having the formula (I):

$$(Ba_{1-a},Ca_a)FX:xEu^{+2} \qquad (I)$$

in which X is at least one halogen selected from the group consisting of Cℓ, Br and I; and a and x are numbers satisfying the conditions of $10^{-3} \leqq a \leqq 2x10^{-2}$ and $0 < x \leqq 0.2$, respectively, in a radiation image recording and reproducing method comprising the steps of causing the phosphor to absorb radiation energy having passed through an object or having radiated from an object, exciting the phophor with an electromagnetic wave to sequentially release the radiation energy stored in the phosphor as light emission, photoetectrically detecting the emitted light to obtain electric signals, and reproducing a visible image from the electric signals, and a radiation image storage panel comprising a support and a stimulable phosphor layer provided thereon which contains said phosphor.

The divalent europuum activated barium fluorohalide phosphor having the above formula (I) used in the present invention has remarkably improved afterglow characteristics particularly in a period of $10^{-3}$ -$10^{-2}$ s after excitation with stimulating rays.

It has further been confirmed that the phosphor used in the present invention gives stimulated emission of high luminance when excited with an electromagnetic wave having a wavelength within the range of 450 - 900 nm after exposure to a radiation such as X-rays.

Accordingly, the sensitivity of the radiation image recording and reproducing method can be enhanced and an image of high quality can be stably obtained, by using the radiation image storage panel of the present invention employing the above-mentioned divalent europium activated barium fluorohalide phosphor.

Fig. 1 graphically shows the afterglow characteristics of a radiation image storage panel containing $(Ba_{0.99},Ca_{0.01})FBr:0.001Eu^{2+}$ phosphor used according to the present invention (dotted curve), and of a radiation image storage panel containing $BaFBr:0.001Eu^{2+}$ phosphor (solid curve).

Fig. 2 graphically shows the relationship between the amount of calcium (a value) and the relative amount of afterglow (solid curve), and the relationship between the a value and the relative sensitivity (dotted curve) with respect to the radiation image storage panel containing $(Ba_{1-a},Ca_a)FBr:0.001Eu^{2+}$ phosphor.

The phosphor used in the invention having the above formula (I) gives stimulated emission when excited with an electromagnetic wave having a wavelength within the region of 450 - 900 nm after exposure to a radiation such as X-rays. From the viewpoint of improving the luminance of the stimulated emission and the afterglow characteristics thereof, the number for a in the formula (I) which indicates the amount of calcium is preferably within the range of $3x10^{-3} \leqq a \leqq 1.2x10^{-2}$. From the viewpoint of the luminance of stimulated emission, X indicating halogen is preferably at least one element selected from the group consisting of Br and I. The stimulation spectrum of the phosphor used in the invention is almost the same as that of the $BaFX:Eu^{2+}$ phosphor as far as the halogen X being a phosphor component is the same for both phosphors. The peak wavelengths of the stimulation spectra of the phosphors used in the invention in which X is Cℓ, Br and I are 550 nm, 590 nm and 630 nm, respectively. Accordingly, also from the viewpoint of matching with stimulating rays such as a He-Ne laser (633 nm) and a semiconductor laser (radiation in the infrared region) which are now proposed to employ in practical use, X in the formula (I) is preferably Br and/or I. Likewise, the stimulated emission spectrum of the phosphor used in the invention is almost the same as that of the $BaFX:Eu^{2+}$ phosphor as far as the halogen X is the same for both phosphors, and the peak wavelength thereof is in the region of 390 - 410 nm depending upon the kind of halogen.

From the viewpoint of both the luminance of stimulated emission and afterglow characteristics, the number for x in the formula (I) which indicates the amount of europium activator is preferably within the range of $10^{-5} \leqq x \leqq 10^{-2}$.

A radiation image storage panel having a phosphor layer which comprises a $Ba_{1-a},Ca_a)FBr:0.001Eu^{2+}$ phosphor (an example of the phosphor used in the present invention) dispersed in a binder has a, relationship betweent the a value indicating the amount of calcium and the amount of after-glow, and the

relationship between the a value and the sensitivity (i.e., luminance of stimulated emission) as shown in Fig. 2.

In Fig. 2. the solid curve indicates the relationship between the a value and the relative amount of afterglow (logarithmic value of [amount of afterglow / amount of stimulated emission]) measured at $2x10^{-3}$ s after scanning with stimulating rays, and the dotted curve indicates a relationship between the a value and the relative sensitivity.

As is evident from Fig. 2, the radiation image storage panel containing the $(Ba_{1-a},Ca_a)FBr:0.001Eu^{2+}$ phosphor is improved in the afterglow characteristics (that is, the relative amount of afterglow is reduced), but the sensitivity thereof is lowered when the amount of calcium (a value) exceeds $2x10^{-2}$. In contrast, when the a value is less than $10^{-3}$, the afterglow characteristics are hardly improved. Particularly in the range of $3x10^{-3} \leqq a \leqq 1.2x10^{-2}$, the panel is remarkably improved in both the afterglow characteristics and the sensitivity.

It has been confirmed that radiation image storage panels employing other divalent europium activated barium fluorohalide phosphors having the formula (I) than the above-mentioned one have the same tendencies on the afterglow characteristics and sensitivity as described above.

The amount of calcium (a value) contained in the phosphor is preferred to be small from the viewpoint of absorption efficiency of the resulting phosphor to a radiation such as X-rays and hygroscopic property thereof. Considering these facts, the a value range ($10^{-3} \leqq a \leqq 2x10^{-2}$) for the phosphor used in the present invention is determined.

The divalent europium activated barium fluorohalide phosphor used in the invention has the above-mentioned formula (I), and other various components may be further incorporated into the phosphor in the preparation thereof, so far as they do not reduce the effect based on the incorporation of Ca (i.e., the improvement of afterglow characteristics and enhancement of the luminance of stimulated emission). Phosphors containing such additive components are included in the phosphor used in the invention. Examples of the additive component include the following substances:

metal oxides as described in JP-A - 55(1980)-160078;

tetrafluoroboric acid compounds as described in US-A- 520,215;

hexafluoro compounds as described in US-A- 502,648;

alkali metal halides ($M^IX'$, in which $M^I$ is at least one alkali metal selected from the group consisting of Li, K, Rb and Cs; and X' is at least one halogen selected from the group consisting of F, Cℓ, Br and I), divalent metal halides ($M^{II}X''_2$, in which $M^{II}$ is at least one divalent metal selected from the group consisting of Be and Mg; and X" is at least one halogen selected from the group consisting of F, Cℓ, Br and I), and trivalent metal halides ($M^{III}X'''_3$, in which $M^{III}$ is at least one trivalent metal selected from the group consisting of Aℓ, Ga, In and Tℓ; and X"' is at least one halogen selected from the group consisting of F, Cℓ, Br and I), as described in US-A- 543,326;

zirconium and scandium as described in JP-A- 56(1981)-116777;

boron as described in JP-A- 57(1982)-23673;

arsenic and silicon as described in JP-A- 57(1982)-23675; and

transition metals as described in US-A-535,928.

The incorporation of metal oxides as described in the above-mentioned JP-A- 55(1980)-160078 is particularly effective to prevent the sintering of a phosphor in the firing stage of the preparation thereof and to enhance the luminance of stimulated emission of the phosphor and the flowability thereof. The metal oxide is generally incorporated in an amount of $5x10^{-5}$ - 0.5 mol per 1 mol of $(Ba_{1-a},Ca_a)FX$ (host component), preferably $10^{-5}$ - 0.3 mol, and more preferably $10^{-4}$ - 0.2 mol. The preferred metal oxides are $SiO_2$ and $Aℓ_2O_3$.

The divalent europium activated barium flurohalide phosphor used in the present invention having the formula (I) can be prepared, for instance, by a process described below.

As the starting materials, the following materials (1) to (4) can be employed:

(1) barium fluoride;

(2) barium halide (except barium fluoride);

(3) calcium halide; and

(4) at least one compound selected from the group consisting of europium compounds such as europium halide, europium oxide, europium nitrate and europium sulfate. Further, ammonium halide may be employed as a flux.

In the first place, the above-mentioned starting materials (1) to (4) are mixed in the stoichiometric ratio corresponding to the formula (II):

$$(Ba_{1-a}, Ca_a)FX:xEu \qquad (II)$$

in which X, a and x have the same meanings as defined above.

The mixing procedure is conducted, for instance, by mixing the starting materials in the form of a suspension. From the suspension of the starting material mixture, the solvent (e.g., water) is removed to obtain a dry mixture in a solid form. The removal of solvent is preferably conducted at room temperature or a higher temperature (for instance, not higher than 200 °C) by drying under reduced pressure and/or vacuum. The mixing procedure is by no means restricted to this one.

In the second place, the obtained dry mixture is finely pulverized, and the pulverized mixture is then placed in a heat-resistant container such as a quartz boat or an alumina crucible and fired in an electric furnace. The firing procedure is conducted at a temperature of 500 - 1300 °C for 0.5 - 6 h under a weak reducing atmosphere such as a nitrogen gas atmosphere containing a small amount of hydrogen gas or a carbon dioxide gas atmosphere containing carbon monoxide gas. When the employed europium compound contains trivalent europium, the trivalent europium is reduced to divalent europium under a weak reducing atmosphere in the firing stage.

After firing the mixture of starting materials for the phosphor as described above, the fired product is taken out of the electric furnace, allowed to stand for cooling and pulverized. The pulverized product may be further fired (second firing). The second firing is conducted at a temperature of 500 - 800 °C for 0.5 - 12 in an inert atmosphere such as a nitrogen gas atmosphere or an argon gas atmosphere, or in the above-mentioned weak reducing atmosphere.

After the firing is complete, a powdery phosphor is obtained. The obtained phosphor may be processed in a conventional manner involving a variety of procedures for the preparation of phosphors such as a washing procedure, a drying procedure and a sieving procedure, if desired.

The above-described process gives the divalent europium activated barium fluorohalide phosphor having the aforementioned formula (I).

In the case that the phosphor used in the present invention contains such additive components as described above, the additive components are incorporated into the suspension in the mixing procedure of the starting materials for the phosphor or into the dry mixture prior to the firing stage.

The radiation image storage panel of the present invention will be described hereinafter.

The radiation image storage panel basically comprises a support and a phosphor layer provided thereon, which comprises a binder and a stimulable phosphor dispersed therein. The phosphor layer can be formed on the support, for instance, by the following procedure.

In the first place, the stimulable phosphor particles prepared as described above and a binder are added to an appropriate solvent, and then they are mixed to prepare a coating dispersion which comprises the phosphor particles homogeneously dispersed in the binder solution.

Examples of the binder to be contained in the phosphor layer include: natural polymers such as proteins (e.g. gelatin), polysaccharides (e.g. dextran) and gum arabic; and synthetic polymers such as polyvinyl butyral, polyvinyl acetate, nitrocellulose, ethylcellulose, vinylidene chloride-vinylchloride copolymer, polymethyl methacrylate, vinyl chloride-vinyl acetate copolymer, polyurethane, cellulose acetate butyrate, polyvinyl alcohol, and linear polyester. Particularly preferred are nitrocellulose, linear polyester, polyalkyl (meth)acrylate, a mixture of nitrocellulose and linear polyester, and a mixture of nitrocellulose and polyalkyl (meth)acrylate. These binders may be crosslinked with a crosslinking agent.

Examples of the solvent employable in the preparation of the coating dispersion include lower alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monoethyl ether; and mixtures of the above-mentioned compounds.

The mixing ratio of the binder to the stimulable phosphor in the coating dispersion can be determined according to the characteristics of the aimed radiation image storage panel and the nature of the phosphor employed. Generally, the ratio is within the range of from 1 : 1 to 1 : 100 (binder : phosphor, by weight), preferably from 1 : 8 to 1 : 40.

The coating dispersion may contain a dispersing agent to improve the dispersibility of the phosphor particles therein, and may contain a variety of additives such as a plasticizer for increasing the bonding between the binder and the phosphor particles in the phosphor layer. Examples of the dispersing agent include phthalic acid, stearic acid, caproic acid and a hydrophobic surface active agent. Examples of the

plasticizer include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The coating dispersion containing the phosphor particles and the binder prepared as described above is applied evenly onto the surface of a support to form a layer of the coating dispersion. The coating procedure can be carried out by a conventional method such as a method using a doctor blade, a roll coater or a knife coater.

After applying the coating dispersion onto the support, the coating dispersion is then heated slowly to dryness so as to complete the formation of the phosphor layer. The thickness of the phosphor layer varies depending upon the characteristics of the aimed radiation image storage panel, the nature of the phosphor and the ratio of the binder to the phosphor. In general, the thickness of the phosphor layer is within the range of from 20 $\mu$m to 1 mm, and preferably within the range of from 50 to 500 $\mu$m.

The phosphor layer can be provided on the support by the methods other than that given in the above. For instance, the phosphor layer is initially prepared on a sheet material (false support) such as a glass plate, a metal plate or a plastic sheet using the aforementioned coating dispersion and then the thus prepared phosphor layer is superposed on the genuine support by pressing or using an adhesive agent.

The phosphor layer may consist of either a single layer or plural (two or more) layers. In the case of two or more phosphor layers, at least one layer contains the aforementioned divalent europium activated barium fluorohalide phosphor. In any cases of a single and plural layers, a variety of known stimulable phosphors can be employed in combination with the above phosphor.

The support material employed in the present invention can be selected from those employable for the radiographic intensifying screens in the conventional radiography or those employable for the known radiation image storage panel. Examples of the support material include plastic films such as films of cellulose acetate, polyester, polyethylene terephthalate, polyamide, polyimide, triacetate and polycarbonate; metal sheets such as aluminum foil and aluminum alloy foil; ordinary papers; baryta paper; resin-coated papers; pigment papers containing titanium dioxide and papers sized with polyvinyl alcohol. From the viewpoint of characteristics of a radiation image storage panel as an information recording material, a plastic film is preferably employed as the support material of the panel of the invention. plastic film may contain a light-absorbing material such as carbon black, or may contain a light-reflecting material such as titanium dioxide. The former is appropriate for preparing a high-sharpness type radiation image storage panel, while the latter is appropriate for preparing a high-sensitivity type radiation image storage panel.

In the preparation of a conventional radiation image storage panel, one or more additional layers are occasionally provided between the support and the phosphor layer so as to enhance the bonding strength between the support and the phosphor layer, or to improve the sensitivity of the panel or the quality of an image provided thereby(sharpness and graininess). For instance, a subbing layer or an adhesive layer may be provided by coating polymer material such as gelatin over the surface of the support on the phosphor layer-side. Otherwise, a light-reflecting layer or a light-absorbing layer may be provided by forming a polymer material layer containing a light-reflecting material such as titanium dioxide or a light-absorbing material such as carbon black. In the present invention, one or more of these additional layers may be provided on the support.

As described in US-A- 496,278, the phosphor layer-side surface of the support (or the surface of an adhesive layer, light-reflecting layer, or light-absorbing layer in the case where such layers are provided on the phosphor layer) may be provided with protruded and depressed portions for the enhancement of the sharpness of resulting image.

The radiation image storage panel generally has a transparent protective film on the free surface of a phosphor layer (not facing a support) to protect the phosphor layer from physical and chemical deterioration. In the radiation image storage panel of the present invention, it is preferable to provide a transparent protective film for the same purpose.

The protective film can be provided on the phosphor layer by coating the surface of the phospnor layer with a solution of a transparent polymer such as a cellulose derivative (e.g., cellulose acetate or nitrocellulose), or a synthetic polymer (e.g., polymethyl methacrylate, polyvinyl butyral, polyvinyl formal, polycarbonate, polyvinyl acetate, or vinyl chloride-vinyl acetate copolymer), and drying the coated solution Alternatively, the protective film can be provided on the phosphor layer by beforehand preparing it from a polymer such as polyethylene terephthalate, polyethylene, polyvinylidene chloride or polyamide, followed by placing and fixing it on the phosphor layer with an appropriate adhesive agent. The transparent protective film preferably has a thickness within the range of 3 to 20 $\mu$m.

For the enhancement of sharpness of the resulting image, at least a portion of the radiation image storage panel may be colored with a colorant, as described in US-A- 4,394,581 and US-A-326,642. For the same purpose, the phosphor layer of the radiation image storage panel according to the present invention may contain a white powder, as described in US-A- 4,350,893.

The present invention will be illustrated by the following examples and comparison examples, but these examples by no means restrict the invention.

Example 1

To 500 ml of distilled water ($H_2O$) were added 175.34 g of barium fluoride ($BaF_2$), 333.18 g of barium bromide ($BaBr_2 \cdot 2H_2O$) and 0.783 g of europium bromide ($EuBr_3$), and they were mixed to give a suspension. The suspension was dried at 60°C under reduced pressure for 3h and further dried at 150°C under vacuum for another $3_h$ The dried product was finely pulverized in a mortar. To 100 g of thus pulverized product was added 0.83 g of calcium bromide ($CaBr_2$) and they were mixed to prepare a mixture of starting materials for a phosphor.

Then, the mixture of the starting materials was placed in an alumina crucible, which was, in turn, placed in a high-temperature electric furnace for firing. The firing was done at 900°C for 1.5 h in a carbon dioxide gas atmosphere containing a small amount of carbon monoxide gas. After the firing was complete, the crucible was taken out of the furnace and allowed to stand for cooling. The fired product was pulverized to obtain a powdery divalent europium activated barium fluorobromide phosphor [$(Ba_{0.99},Ca_{0.01})$-FBr:0.001$Eu^{2+}$]

Further, a variety of divalent europium activated barium fluorobromide phosphors were obtained by varying the amount of calcium bromide to be added within the range of $10^{-4}$ - $10^{-1}$ mol per 1 mol of BaFBr in the above-described preparation of the phosphor.

Subsequently, using the obtained phosphors, a variety of radiation image storage panels were prepared in the following manner.

To a mixture of the phosphor particles and a linear polyester resin were successively added methyl ethyl ketone and nitrocellulose (nitrification degree: 11.5 %), to prepare a dispersion containing the phosphor particles. Then, tricresyl phosphate, n-butanol and methyl ethyl ketone were added to the dispersion, and the mixture was sufficiently stirred by means of a propeller agitater to obtain a homogeneous coating dispersion containing the binder and the phosphor particles in the ratio of 1 : 20 (binder : phosphor, by weight) and having a viscosity of 2,5-3,5Pa.s (25 - 35 PS) (at 25°C).

Then, the coating dispersion was applied onto a polyethylene terephthalate sheet containing carbon black (support, thickness: 250 µm) placed horizontally on a glass plate. The application of the coating dispersion was carried out using a doctor blade. After the coating was complete, the support having the coating dispersion was placed in an oven and heated at a temperature gradually rising from 25 to 100°C. Thus, a phosphor layer having a thickness of 200 µm was formed on the support.

On the phosphor layer was placed a transparent polyethylene terephthalate film (thickness: 12 µm; provided with a polyester adhesive layer) to combine the film and the phosphor layer with the adhesive layer. Thus, a radiation image storage panel consisting essentially of a support, a phosphor layer and a transparent protective film was prepared.

Comparison Example 1

The procedure of Example 1 was repeated except for adding no calcium bromide to obtain a powdery divalent europium activated barium fluorobromide phosphor (BaFBr: 0.001$Eu^{2+}$).

Using thus obtained phosphor particles, a radiation image storage panel consisting essentially of a support, a phosphor layer and a transparent protective film was prepared in the same manner as described in Example 1.

The radiation image storage panels prepared in Example 1 and Comparison Example 1 were evaluated on the sensitivity and the afterglow characteristics according to the following tests.

(1) Sensitivity

The radiation image storage panel was excited with a He-Ne laser beam (wavelength: 632.8 nm) after

exposure to a radiation at 80 kV to measure the sensitivity thereof.

(2) Afterglow characteristics

The radiation image storage panel was cut to give a test strip having a width of 7 cm. The test strip was exposed to X-rays at 80 kV and subsequently once scanned with a He-Ne laser beam (wavelength: 632.8 nm) in the direction of its width for $5x10^{-3}$ s to measure the decay of afterglow of the stimulated emission.

The results of the evaluation on the sensitivity and afterglow characteristics are graphically illustrated in Figs. 1 and 2.

Fig. 1 illustrates graphs (decay curves of afterglow) in which the time is plotted as the abscissa and [amount of afterglow / amount of stimulated emission] as the ordinate,
Dotted curve: the radiation image storage panel containing $(Ba_{0.99},Ca_{0.01})FBr:0.001Eu^{2+}$ phosphor, and
Solid curve: the radiation image storage panel containing $BaFBr:0.001Eu^{2+}$ phosphor.

Fig. 2 illustrates graphs on $(Ba_{1-a},Ca_a)FBr: 0.001Eu^{2+}$ phosphor, in which the
Solid curve indicates the relationship between the amount of calcium (a value) and the logarithmic value of [amount of afterglow / amount of stimulated emission], and the
dotted curve indicates the relationship between the amount of calcium (a value) and the relative sensitivity.

In Fig. 2, the amount of afterglow is a value measured at $2x10^{-3}$s after excitation with a Ne-Ne laser beam.

Example 2

The procedure of Example 1 was repeated except for adding 0.15 g of silicon dioxide ($SiO_2$) as well as 0.83 g of calcium bromide to 100 g of the pulverized product, to obtain a powdery divalent europium activated barium fluorobromide phosphor [$(Ba_{0.99},Ca_{0.01})FBr\cdot 0.006SiO_2:0.001Eu^{2+}$].

Using the thus obtained phosphor particles, a radiation image storage panel consisting essentially of a support, a phosphor layer and a transparent protective film was prepared in the same manner as described in Example 1.

The radiation image storage panel prepared in Example 2 was evaluated on the sensitivity and the afterglow characteristics by the above-described tests.

As a result, the relative sensitivity and the logarithmic value of [amount of afterglow / amount of stimulated emission] were respectively 1.2 and -3.5 for the radiation image storage panel containing $(Ba_{0.99},Ca_{0.01}) FBr\cdot 0.006SiO_2:0.001Eu^{2+}$ phosphor, though those were 0.1 and -2.9 for the radiation image storage panel of Comparison Example 1 containing $BaFBr:0.001Eu^{2+}$ phosphor (see Fig. 2).

## Claims

**1.** Use of a divalent europium activated barium fluorohalide phosphor having the formula (I):

$$(Ba_{1-a},Ca_a)FX:xEu^{+2} \qquad (I)$$

in which X is at least one halogen selected from the group consisting of Cℓ, Br and I; and a and x are numbers satisfying the conditions of $10^{-3} \leq a \leq 2x10^{-2}$ and $0 \leq x \leq 0.2$, respectively, in a radiation image recording and reproducing method comprising the steps of causing the phosphor to absorb radiation energy having passed through an object or having radiated from an object, exciting the phophor with an electromagnetic wave to sequentially release the radiation energy stored in the phosphor as light emission, photoelectrically detecting the emitted light to obtain electric signals, and reproducing a visible image from the electric signals.

**2.** The use of the phosphor as claimed in claim 1, wherein a in the formula (I) is a number satisfying the condition of $3x10^{-3} \leq a \leq 1.2x10^{-2}$.

3. The use of the phosphor as claimed in claim 1, wherein X in the formula (I) is selected from the group consisting of Br and I.

4. A radiation image storage panel comprising a support and a stimulable phosphor layer provided thereon, characterized in that said stimulable phosphor layer contains a divalent europium activated barium fluorohalide phosphor having the formula (I):

$$(Ba_{1-a}, Ca_a)FX:xEu^{+2} \qquad (I)$$

in which X is at least one halogen selected from the group consisting of Cℓ, Br and I; and a and x are numbers satisfying the conditions of $10^{-3} \leqq a \leqq 2x10^{-2}$ and $0 < x \leqq 0.2$, respectively.

5. The radiation image storage panel as claimed in claim 4, in which a in the formula (I) is a number satisfying the condition of $3x10^{-3} \leqq a \leqq 1.2x10^{-2}$.

6. The radiation image storage panel as claimed in claim 4, in which X in the formula (I) is at least one halogen selected from the group consisting of Br and I.

## Revendications

1. Utilisation d'une matière luminescente de fluorohalogénure de baryum activé par l'europium bivalent ayant la formule (I) :

$$(Ba_{1-a}, Ca_a)\ FX\ :\ xEu^{+2} \qquad (I)$$

dans laquelle X est au moins un halogène choisi dans le groupe comprenant Cl,Br et I ; et a et x sont des nombres satisfaisant les conditions $10^{-3} \leqq a \leqq 2x10^{-2}$ et $0 < x \leqq 0{,}2$ , respectivement, dans un procédé d'enregistrement et de reproduction d'une image obtenue par rayonnement comprenant les étapes d'entrainement pour la matière luminescente à absorber une énergie de rayonnement ayant passé à travers un objet ou ayant été rayonnée à partir d'un objet , excitation de la matière luminescente avec une onde électromagnétique pour libérer séquentiellement l'énergie de rayonnement enregistrée dans la matière luminescente en émission lumineuse , détection de façon photoélectrique de la lumière émise pour obtenir des signaux électriques , et reproduction d'une image visible à partir des signaux électriques .

2. L'utilisation de la matière luminescente selon la revendication 1 , dans laquelle a dans la formule (I) est un nombre satisfaisant la condition de $3 \times 10^{-3} \leqq a \leqq 1{,}2 \times 10^{-2}$ .

3. L'utilisation de la matière luminescente selon la revendication 1 , dans laquelle X dans la formule (1) est choisi dans le groupe comprenant Br et I .

4. Un écran d'enregistrement d'une image obtenue par rayonnement comprenant un support et une couche de matière luminescente excitable fournie par dessus , caractérisé en ce que ladite couche de matière luminescente excitable contient une matière luminescente de fluorohalogénure de baryum activé par l'europium bivalent ayant la formule (I) :

$$(Ba_{1-a}, Ca_a)\ FX\ :\ xEu^{2+} \qquad (I)$$

dans laquelle X est au moins un halogène choisi à partir du groupe comprenant Cl ,Br et I ; et a et x sont des nombres satisfaisant les conditions de $10^{-3} \leqq a \leqq 2 \times 10^{-2}$ et $0 < x \leqq 0{,}2$, respectivement .

5. L'écran d'enregistrement d'une image obtenue par rayonnement selon la revendication 4 , dans laquelle a dans la formule (I) est un nombre satisfaisant la condition de $3x10^{-3} \leqq x \leqq 1,2X10^{-2}$ .

6. L'écran d'enregistrement d'une image obtenue par rayonnement selon la revendication 4, dans laquelle X dans la formule (I) est au moins un halogène choisi dans le groupe comprenant Br et I.

## Ansprüche

1. Verwendung eines mit zweiwertigem Europium aktivierten Bariumfluorhalogenidleuchtstoffs mit der Formel I

$$(Ba_{1-a}, Ca_a)FX:xEu^{+2} \qquad (I)$$

worin X wenigstens ein Halogen, gewählt aus der Gruppe, bestehend aus Cl, Br und I, ist; und a und x Zahlen sind, die den Bedingungen $10^{-3} \leqq a \leqq 2 \times 10^{-2}$ bzw. $0 < x \leqq 0,2$ entsprechen,
in einem Strahlungsbildaufzeichnungs- und -wiedergabeverfahren, bei dem bewirkt wird, daß der Leuchtstoff Strahlungsenergie, die durch ein Objekt geleitet worden ist oder von einem Objekt ausgestrahlt worden ist, absorbiert, der Leuchtstoff mit einer elektromagnetischen Welle angeregt wird, um aufeinanderfolgend die in dem Leuchtstoff gespeicherte Strahlungsenergie als Lichtemission freizusetzen, das emittierte Licht photoelektrisch nachgewiesen wird, um elektrische Signale zu erhalten, und ein sichtbares Bild von den elektrischen Signalen wiedergegeben wird.

2. Verwendung des Leuchtstoffs nach Anspruch 1, worin a in der Formel I eine Zahl ist, die der Bedingung $3 \times 10^{-3} \leqq a \leqq 1,2 \times 10^{-2}$ genügt.

3. Verwendung des Leuchtstoffs nach Anspruch 1, worin X in der Formel I aus der Gruppe, bestehend aus Br und I, gewählt wird.

4. Strahlungsbildspeicherplatte, umfassend einen Träger und eine darauf befindliche stimulierbare Leuchtstoffschicht, **dadurch gekennzeichnet,** daß die stimulierbare Leuchtstoffschicht einen mit zweiwertigem Europium aktivierten Bariumfluorhalogenidleuchtstoff mit der Formel I

$$(Ba_{1-a}, Ca_a)FX:xEu^{+2} \qquad (I)$$

enthält, worin X wenigstens ein Halogen, gewählt aus der Gruppe, bestehend aus Cl, Br und I, ist; und a und x Zahlen sind, die den Bedingungen $10^{-3} \leqq a \leqq 2 \times 10^{-2}$ bzw. $0 < x \leqq 0,2$ genügen.

5. Strahlungsbildspeicherplatte nach Anspruch 4, worin a in der Formel I eine Zahl ist, die der Bedingung $3 \times 10^{-3} \leqq x \leqq 1,2 \times 10^{-2}$ genügt.

6. Strahlungsbildspeicherplatte nach Anspruch 4, worin X in der Formel I wenigstens ein Halogen, gewählt aus der Gruppe, bestehend aus Br und I, ist.

FIG. 1

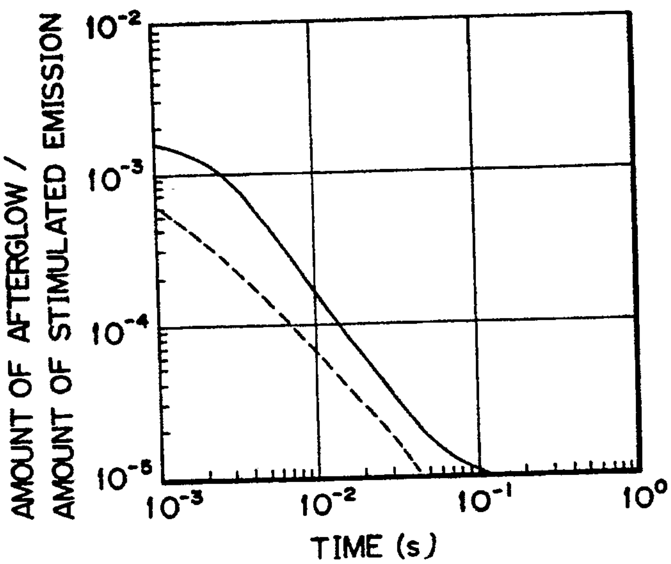
AMOUNT OF AFTERGLOW / AMOUNT OF STIMULATED EMISSION
10-2
10-3
10-4
10-5
10-3
10-2
10-1
10⁰
TIME (s)

FIG. 2

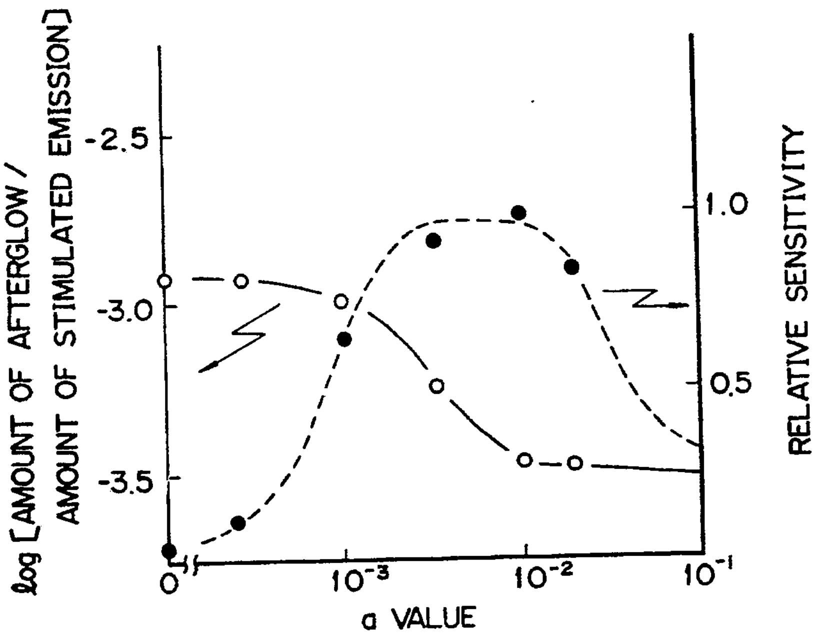
log [AMOUNT OF AFTERGLOW / AMOUNT OF STIMULATED EMISSION]
-2.5
-3.0
-3.5
RELATIVE SENSITIVITY
1.0
0.5
0
10-3
10-2
10-1
a VALUE